# EUROPÄISCHE PATENTANMELDUNG

(11) **EP 2 233 646 A2**
(43) Veröffentlichungstag der Anmeldung: **29.09.2010**
(21) Anmeldenummer: 09015585.4
(22) Anmeldetag: 16.12.2009
(51) Int. Cl.: E02F 9/12, E02F 9/20, E02F 9/22

(54) **Antrieb für einen Hydraulikbagger**

(30) Priorität: 23.03.2009 DE 202009004071 U
(71) Anmelder: Liebherr-France SAS, 68005 Colmar Cedex (FR)
(72) Erfinder: Boehm, Daniel, 68500 Bergholtz (FR); Landmann, Thomas, 68420 Eguisheim (FR); Späth, Dr. Ralf, 79206 Breisach (DE)
(74) Vertreter: Laufhütte, Dieter

(57) **Zusammenfassung**

Die vorliegende Erfindung betrifft einen Antrieb für einen Bagger mit einer Reihe von Einzelantrieben, wie einem Drehwerksantrieb (E1,E2), einem Hubantrieb (E3,E4), einem Löffelantrieb (18) und einem Stielantrieb (16), wobei für den Drehwerksantrieb (E1,E2) zwei reversierbare Verstelleinheiten (E1,E2) vorgesehen sind, die zumindest mit einem Energiespeicher (SPR) gekoppelt sind.

## Beschreibung

Die Erfindung betrifft einen Antrieb für eine Baumaschine, insbesondere für einen Bagger mit einer Reihe von Einzelantrieben, wie mindestens einem rotatorischen Antrieb, z.B. einem Drehwerksantrieb und mindesten einem Linearantrieb , z.B. einem Hubantrieb, einem Löffelantrieb und und/oder einem Stielantrieb.

Aus der DE 103 43 016 A1 ist es bereits bekannt, einen doppeltwirkenden Hydraulikzylinder mittels zweier Hydropumpen zu betätigen. Eine der beiden Hydropumpen ist dabei mit den beiden Arbeitskammern des doppeltwirkenden Hydraulikzylinders in einem geschlossenen Kreislauf verbunden. Die zweite Hydropumpe ist dagegen nur mit der kolbenseitigen Arbeitskammer in einem offenen Kreislauf verbunden. Die beiden Hydropumpen sind jeweils in ihrem Fördervolumen verstellbar. Durch Einstellung eines entsprechenden Fördervolumenverhältnisses über den unterschiedlichen Volumenstrom in der kolbenseitigen Arbeitskammer wird der kolbenstangenseitigen Arbeitskammer Rechnung getragen.

Aus der DE 10 2007 025 742 A1 ist ein hydrostatischer Antrieb mit einer ersten Hydropumpe mit einer zweiten Hydropumpe und mit einem doppelt wirkenden Hydraulikzylinder bekannt, wobei der Antrieb ein Entnahmeventil zur Entnahme von Druckmittel aus einem Druckmittelreservoir bei einer ersten Förderrichtung der Hydropumpen umfaßt.

Hydrostatische Antriebe werden unter anderem zum Antrieb von Hydraulikbaggern verwendet. Als Antriebsaggregat dient in der Regel ein Dieselmotor, der als Antriebselement für die hydraulischen Verbraucher dient. Die hydraulischen Verbraucher sind Einzelantriebe, wie beispielsweise der Fahrantrieb, der Drehwerksantrieb und die aus doppeltwirkenden Hydraulikzylindern bestehenden Hubantrieb, Löffelantrieb und Stielantrieb. So wird über den Hubantrieb beispielsweise die komplette Ausrüstung des Gerätes betätigt. Die Lageenergie der Ausrüstung ändert sich bei jeder Hub- bzw. Senkbewegung. Bei der Hubbewegung muß Energie ins System eingebracht werden, während bei der Senkbewegung diese Energie wieder frei wird. Bei bekannten Systemen wird die frei werdende Energie bei der Senkbewegung der Hubausrüstung einfach vernichtet. Dies geschieht durch eine entsprechende Abdrosselung des Rücklaufstroms der Hubzylinder im Steuerkolben. Da das Gewicht der Ausrüstung ein Vielfaches der Ladung im Löffel darstellt, wird hier ein beträchtlicher Energieanteil vernichtet.

Aufgabe der Erfindung ist es, einen an sich bekannten Antrieb für einen Bagger derart weiterzubilden, daß ein möglichst großer Anteil der Antriebsenergie zurückgewonnen werden kann und für weitere Antriebsbewegungen zur Verfügung steht.

Erfindungsgemäß wird diese Aufgabe durch die Kombination der Merkmale des Anspruchs 1 gelöst.

Demnach ist bei einem gattungsgemäßen Antrieb für einen Bagger mit einer Reihe von Einzelantrieben, wie ein Drehwerksantrieb, einem Hubantrieb, einem Löffelantrieb und einem Stielantrieb der geschlossene Kreislauf für den Drehwerksantrieb aus zwei reversierbaren Verstelleinheiten gebildet, die zumindest mit einem Energiespeicher gekoppelt sind.

Grundsätzlich ist es zwar bereits bekannt, daß ein Drehwerk eines Baggers im geschlossenen Kreis gefahren wird. Bei bekannten Hydraulikbaggern ist jedoch die eine reversierbare Verstelleinheit eine verstellbare Hydraulikpumpe, während der zugehörige Hydraulikmotor starr ist, so daß die Hochdruckseite und die Niederdruckseite mit der Oberwagendrehrichtung wechseln.

Demgegenüber sind nach der vorliegenden Erfindung, in der die Hydraulikeinheiten beide hydraulische, reversierbare Verstelleinheiten sind, beide Elemente sowohl als Pumpe wie auch als Motor betreibbar. Soweit die reversierbaren Verstelleinheiten also hier als hydraulische Komponenten ausgebildet sind, kann im Unterschied zum vorgenannten Stand der Technik eine Seite des geschlossenen Kreises zwischen den beiden reversierbaren Verstelleinrichtungen und einem ersten Speicher, unter Hochdruck stehen, während die andere Seite des geschlossenen Kreises immer unter Niederdruck steht.

Bei Betätigung des Drehwerks wird für den Fall des Abbremsens des Oberwagens des Baggers Bremsenergie von der einen Verstelleinheit zum Speichern weitergeleitet. Bei Bedarf kann diese Energie aber auch über die zweite reversierbare Verstelleinheit an weitere Einheiten, beispielsweise Pumpen, weitergegeben werden, die mit der zweiten Verstelleinheit koppelbar sind.

Im Speicher wird die Bremsenergie des Oberwagens nun abgespeichert, um sie bei der nächsten Beschleunigung wieder verwenden zu können. Diese Energie fließt dann wieder der als Drehwerksmotor dienenden reversierbaren Verstelleinheit zu. Bedarfsweise kann die im Speicher gespeicherte Energie aber auch der anderen reversierbaren Verstelleinheit zugeführt werden, über die beispielsweise die Arbeitshydraulik von weiteren angeschlossenen Systemen, wie dem Hubwerk, etc. unterstützt werden.

Vorteilhafte Ausgestaltungen der Erfindung ergeben sich aus den sich an den Hauptanspruch anschließenden Unteransprüchen.

So kann mindestens eine der reversierbaren Verstelleinheiten mit dem Antriebsaggregat des Baggers, beispielsweise dem Dieselmotor, verbindbar sein. Da die Lade- und Entladevorgänge mit Wirkungsgraden behaftet sind, kann der Energiespeicher über dieses Antriebsaggregat entsprechend nachgeladen werden.

Die reversierbaren Verstelleinheiten sind vorteilhafterweise hydraulische Verstelleinheiten, die die Durchflußrichtung bei gleicher Drehzahlrichtung umkehren können, so daß sie als Motor oder Pumpe arbeiten können. Der mindestens eine Speicher ist vorteilhaft ein Hydraulikspeicher.

Besonders vorteilhaft kann ein zweiter Hydraulikspeicher zur Kompensation des vom anderen Hydraulikspeicher entnommenen oder zurückgespeisten Hydrauliköls vorgesehen sein. Dieser zweite Hydraulikspeicher ist vorzugsweise auf der Niederdruckseite des geschlossenen Hydraulikkreislaufs angeschlossen.

Besonders vorteilhaft können die Verstelleinheiten des Drehwerkantriebs mit den Verstelleinheiten des Hubwerkantriebs energetisch gekoppelt sein. Dies ermöglicht es, Energie von einem Antriebskreis auf den anderen zu verlagern. Die gesamte Steuerung kann vorteilhaft über eine elektronische Energiemanagementsteuerung erfolgen.

Gemäß einer alternativen Ausführungsvariante können die reversierbaren Verstelleinheiten aber auch aus elektrischen Verstelleinheiten bestehen, die jeweils aus einer Elektroeinheit mit einem Spannungswandler bestehen. In diesem Fall ist der Speicher vorteilhaft ein elektrischer Speicher, beispielsweise eine Batterie oder ein Superkondensator (Ultracaps).

Vorteilhaft kann ein zusätzlicher Spannungswandler vorhanden sein, über den weitere elektrische Antriebe, wie beispielsweise Antriebe für Kühlungslüfter, Klimakompressoren, Wasserpumpen oder ähnlichem, versorgbar sind.

Nach einer besonders bevorzugten Ausgestaltung der Erfindung ist mindestens ein Hubzylinder vorgesehen, der mit zwei hydraulischen Verstelleinheiten verbunden ist. Die beiden hydraulischen Verstelleinheiten können mit einer der reversierbaren Verstelleinheiten des Drehwerksantriebs verbindbar sein.

Bevorzugt kann einer der hydraulischen Verstelleinheiten ebenfalls mit einem Hydraulikspeicher verbunden sein.

Weitere Einzelheiten, Merkmale und Vorteile der Erfindung werden anhand eines in der Zeichnung dargestellten Ausführungsbeispieles näher erläutert. Es zeigen:
- Figur 1:: eine schematische Darstellung des Antriebs gemäß einer ersten Ausfüh- rungsvariante der Erfindung;
- Figur 2:: eine schematische Darstellung eines alternativen Antriebs und
- Figur 3:: eine schematische Darstellung eines weiteren alternativen Antriebs.

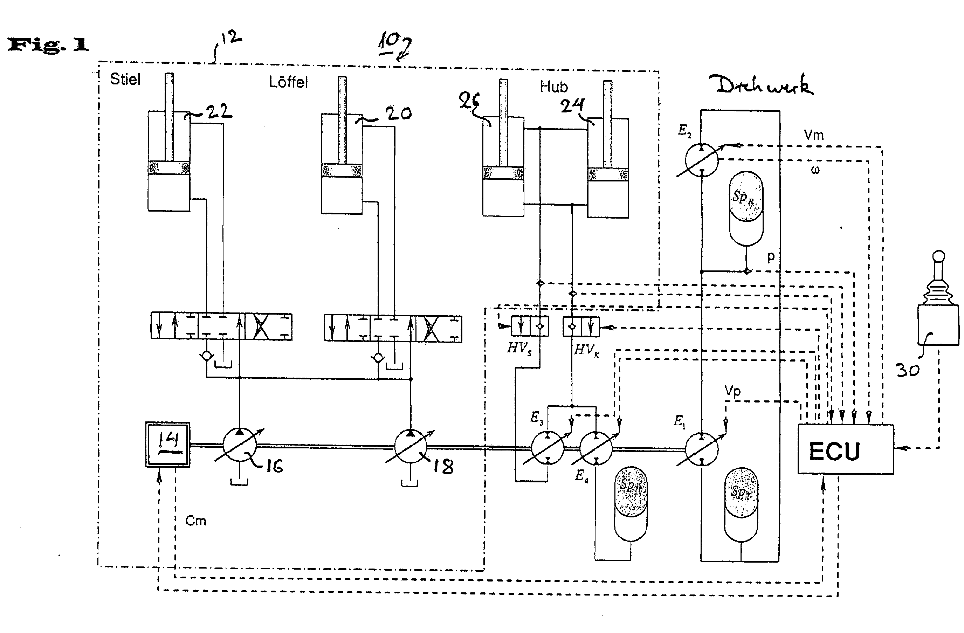

In der Figur 1 ist das Schaltbild eines erfindungsgemäßen Antriebs gezeigt, bei dem eine Reihe von Einzelantrieben hydraulisch angetrieben werden. Bei den Einzelantrieben handelt es sich zum einen um den Antrieb für einen Stiel, für einen Löffel, für den Hubzylinder und für das Drehwerk. Innerhalb der strichpunktierten Linie 12 sind die einzelnen Komponenten eines an sich bekannten Hydraulikantriebs für einen Hydraulikbagger (hier nicht im einzelnen dargestellt) wiedergegeben. Hier ist zunächst ein schematisch dargestelltes Antriebsaggregat 14 vorgesehen, welches üblicherweise ein Dieselmotor ist. Über den Dieselmotor werden Hydraulikpumpen 16 und 18 angetrieben, die entsprechende doppeltwirkende Hydraulikzylinder 20 und 22 mit Hydrauliköl versorgen. Bei dem doppeltwirkenden Hydraulikzylinder 20 handelt es sich um den Antriebszylinder für den hier nicht näher dargestellten Löffel des Baggers. Beim doppeltwirkenden Hydraulikzylinder 22 handelt es sich um den Antriebszylinder für den hier ebenfalls nicht näher dargestellten Stiel. Neben den doppeltwirkenden Hydraulikzylindern 20 und 22 sind weiterhin zwei doppeltwirkende Hydraulikzylinder 24 und 26 vorhanden, die als Hubzylinder den Hub und die Senkbewegung der gesamten Ausrüstung des hier nicht näher dargestellten Hydraulikbaggers bewegen. Sowohl der Antrieb der Hubzylinder 24 und 26 sowie der Antrieb des hier ebenfalls nicht näher dargestellten Drehwerks sind in der hier näher erläuterten Ausführungsvariante der Erfindung neu gestaltet. Die Antriebskomponenten des Drehwerks bestehen aus jeweils hydraulischreversierbaren Verstelleinheiten E₂ und E₁, die das Drehwerk im geschlossenen Kreis betätigen. Gemäß der vorliegenden Erfindung können die Durchflußrichtung dieser hydraulischen-reversierbaren Verstelleinheiten bei gleicher Drehzahlrichtung umkehren, so daß die Verstelleinheiten E₂ sowie E₁ als Pumpe wie auch als Motor arbeiten können. Auf einer Seite des geschlossenen Kreises zwischen den Verstelleinheiten E₂ und E₁ herrscht Hochdruck. An der Verbindungsleitung auf dieser Hochdruckseite ist ein Hydraulikspeicher Sp_{R} angeschlossen, der als Energiespeicher dient. Je nach Bedarf kann dieser Hydraulikspeicher Sp_{R} von der Verstelleinheit E₂ oder E₁ beladen bzw. entladen werden. Bei der Beladung wird Energie in den Speicher geladen, bei der Entladung wird die gespeicherte Energie wieder an die entsprechende Einheit zurückgegeben.

Auf der Niederdruckseite des geschlossenen Kreislaufs ist in der Leitung zwischen der Verstelleinheit E₂ und E₁ ein weiterer Speicher Sp_{T} vorgesehen, der als Tank angesehen werden kann. Er kompensiert das Hydraulikvolumen, welches auf der Hochdruckseite vom Speicher Sp_{R} aus dem Hydraulikkreis entnommen bzw. in diesen zurückgespeist wird. Das bedeutet, daß das auf der einen Seite des Hydraulikkreislaufes entnommen Ölvolumen auf der anderen Seite wieder eingespeist wird und umgekehrt.

Die Hubzylinder 24 und 26 sind unmittelbar mit hydraulischen Verstelleinheiten E₃ und E₄ verbunden. Um zu verhindern, daß die von den Hubzylindern 24 und 26 gehaltene Last über Leckagen in den hydraulischen Verstelleinheiten E₃ und E₄ langsam absinkt, sind zwei Lasthalteventile HV_{K} und HV_{S} eingebaut. Diese werden bei der üblichen Arbeitsbewegung entsprechend aufgesteuert, so daß der Ölfluß nicht gehindert ist. Die Hydraulikeinheit E₄ ist auf der Gegenseite des Anschlusses zu den Hydraulikzylindern 24 und 26 mit einem weiteren Speicher Sp_{H} verbunden. Es handelt sich hier ebenfalls um einen Hydraulikspeicher. Die Verwendung des Speichers Sp_{H} bietet die Vorteile, daß die Hydraulikeinheit E₄ in ihrer Baugröße reduziert werden kann und daß der Wirkungsgrad der Energiespeicherung insgesamt verbessert werden kann.

Die hydraulischen Verstelleinheiten E₃ und E₄ sind mit der hydraulischreversierbaren Verstelleinheit E₁ des Drehwerkantriebs in der in Figur 1 dargestellten Art und Weise gekoppelt.

Die gesamte Steuerung des Antriebs erfolgt über die elektronische Steuereinheit ECU, die das elektronische Energiemanagement übernimmt. Mit den gestrichelten Linien sind die jeweiligen Signalleitungen der Steuerung bezeichnet. In die Steuerung ECU gehen die Vorsteuerbefehle der Vorsteuerung 30, über die die jeweiligen Arbeitsbefehle für das Hubwerk und das Drehwerk vom Baggerführer eingegeben werden können.

Die Funktionsweise der unterschiedlichen Antriebe im Rahmen des erfindungsgemäßen Betriebs wird im folgenden wiedergegeben. Über das Drehwerk wird der Baggeroberwagen gegenüber dem Baggerunterwagen bewegt. Beim Abbremsen des Baggeroberwagens fließt Bremsenergie von der Verstelleinheit E₂ zum Speicher Sp_{R} und bei Bedarf auch zur als Hydraulikmotor wirkenden hydraulisch reversierbaren Verstelleinheit E₁, über welche beispielsweise die hydraulischen Pumpen E₃ und E₄ angetrieben werden können.

Im Speicher Sp_{R} wird die Bremsenergie des Oberwagens abgespeichert, um sie bei der nächsten Beschleunigung wieder verwenden zu können. Diese Energie fließt dann wieder zur diesmal als Drehwerksmotor dienenden hydraulischen reversierbaren Verstelleinheit E₂ oder bei entsprechendem Bedarf auch zu der hydraulisch reversierbaren Verstelleinheit E₁, über welche die Arbeitshydraulik unterstützt werden kann.

Da nun die Belade- und Entladevorgänge der Speicher mit Wirkungsgraden behaftet sind, muss bei entsprechendem Abnehmen des Speicherdrucks der jeweilige Speicher über das Antriebsaggregat 14 nachgeladen werden. Dies geschieht nach entsprechender Ansteuerung durch die Steuerung ECU über die Verstelleinheit E₁.

Die Hubzylinder 24 und 26 können beim Senken der Ausrüstung, das heißt beim Einfahren die Lageenergie der Ausrüstung über die Verstelleinheiten E₃ und E₄ in den Speicher Sp_{H} und zusätzlich über die hydraulisch reversierbare Verstelleinheit E₁ in den Speicher Sp_{R} einspeist. Die Hydraulikeinheiten E₃, E₄ und E₁ bilden jeweils einen hydraulischen Transformator, so daß die nötigen Druckuntersetzungen zwischen den Hydraulikzylindern 24 und 26 und den Hydraulikspeichern Sp_{H} und Sp_{R} nahezu verlustfrei stattfinden. Weiter ermöglicht diese Lösung eine freie Senkgeschwindigkeit, welche nur vom Baggerführer beeinflußt wird. Bei Bedarf kann zusätzliche Energie vom Antriebsaggregat 14 in die Speicher Sp_{H} und Sp_{R} zur Aufrechterhaltung der Energieniveaus und zur besseren Auslastung des Antriebsmotors gefördert werden.

Beim Heben der Ausrüstung bzw. Ausfahren der Hydraulikzylinder, wird nun gespeicherte Energie aus den Hydraulikspeichern Sp_{H} und Sp_{R} über die Hydraulikeinheiten E₁, E₃ und E₄ wieder den doppeltwirkenden Hydraulikzylindern 24, 26 zugeführt. Parallel dazu kann zusätzliche Energie vom Antriebsaggregat 14 addiert werden, so daß diese Bewegung nun nicht mehr von der installierten Motorleistung in ihrer Geschwindigkeit begrenzt ist. Hierdurch sorgt die hier vorgestellte erfindungsgemäße Lösung nicht nur für eine Energierückgewinnung bzw. Energieeinsparung, sondern auch für eine bessere Maschinendynamik des eingesetzten Baggers. Gegenüber üblichen Seriengeräten wird die Hubbewegung um ein vielfaches beschleunigt.

Die elektronische Steuereinheit ECU besteht vorteilhaft aus mehreren Modulen und erfaßt die unterschiedlichen Signale des Antriebs, verarbeitet diese und steuert schließlich die unterschiedlichen Verstellorgane, wie beispielsweise die Pumpenverstellung oder die Schiebeventile entsprechend.

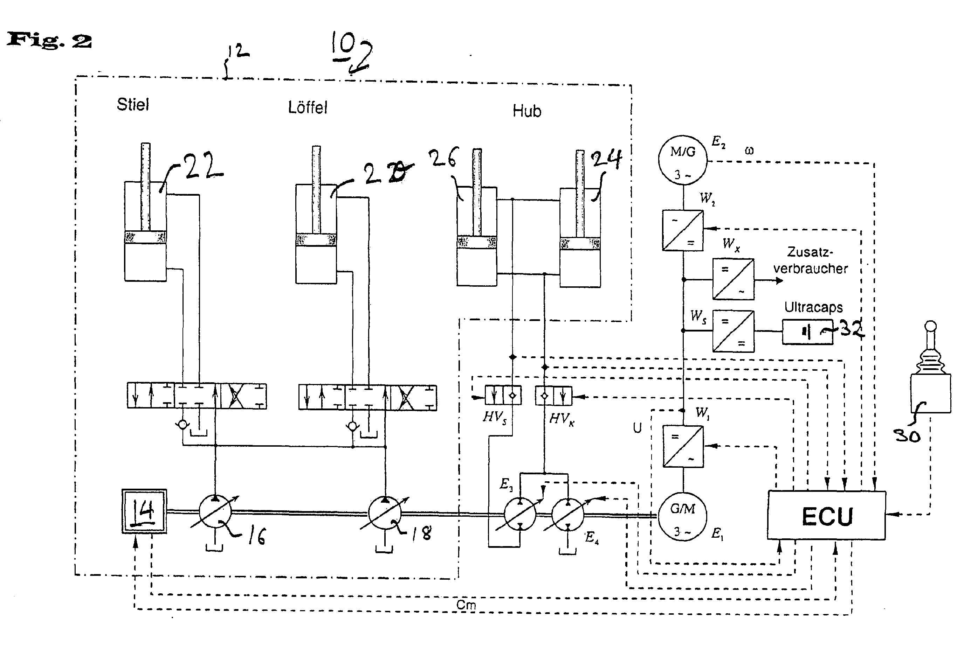

In Figur 2 ist eine weitere Ausführungsvariante der Erfindung dargestellt. Hier ist im Unterschied zur Figur 1 eine elektrische Lösung des Drehwerkantriebs realisiert. Die Funktionsweise dieses Antriebs entspricht weitgehend derjenigen gemäß der Ausführungsform nach Figur 1, so daß zu der Gesamtwirkung und dem sonstigen Aufbau auf die vorherige Darstellung verwiesen werden kann. Allerdings sind die in der Ausführungsform gemäß Figur 1 dargestellten Hydraulikeinheiten E₁ bzw. E₂ im vorliegenden Fall Elektroeinheiten, welche ebenfalls als reversierbare Einheiten und im vorliegenden Fall als Elektromotor bzw. Generator wirken. Den jeweiligen reversierbaren Einheiten E₂ und E₁ sind Spannungswandler W₂ und W₁ zugeordnet. Anstelle des Hydraulikspeichers Sp_{R} in Figur 1 wird hier ein elektrischer Speicher in Form einer Batterie oder eines Superkondensators (Ultracaps) in Verbindung mit einem Spannungswandler W_{S} ersetzt. Bei Verwendung von Superkondensatoren muss der in der hier dargestellten Ausführungsvariante nach Figur 2 vorgesehene Spannungswandler W_{S} nicht unbedingt vorhanden sein.

Zusätzlich können bei der elektrischen Lösung gemäß Figur 2 über entsprechende Spannungswandler W_{X} noch Zusatzverbraucher angeschlossen werden. Hier kann es sich um elektrifizierte Zusatzverbraucher handeln, beispielsweise um den elektrischen Antrieb eines Kühlungslüfters, den elektrischen Antrieb eines Klimakompressors und den elektrischen Antrieb von Wasserpumpen. Die Verbraucher sind hier in der Schemadarstellung gemäß Figur 2 nicht im einzelnen dargestellte. Die reversierbaren Verstelleinheiten E₃ und E₄, die mit den Hubzylindern 24 und 26 verbunden sind, sind in der Ausführungsvariante gemäß Figur 2 ebenfalls vorhanden. Allerdings ist hier in der Ausführungsform die reversierbare Verstelleinheit E₄ nicht mit einem Hydraulikspeicher Sp_{H} verbunden, sondern mit einem Hydraulikölsumpf.

Die Arbeitsweise des Antriebs gemäß der Ausführungsvariante gemäß Figur 2 ähnelt derjenigen gemäß der reinen Hydrauliklösung gemäß der Figur 1. Hier besteht allerdings der Unterschied, daß die Energie des Drehwerks und des Hubs nur in der einen elektrischen Speichereinheit 32 (Ultracaps, bzw. Batterie) gespeichert wird. Hier werden also die hydraulischen Speicher Sp_{H} und Sp_{R} der hydraulischen Lösung gemäß Figur 1 durch diesen einen elektrischen Speicher 32 ersetzt.

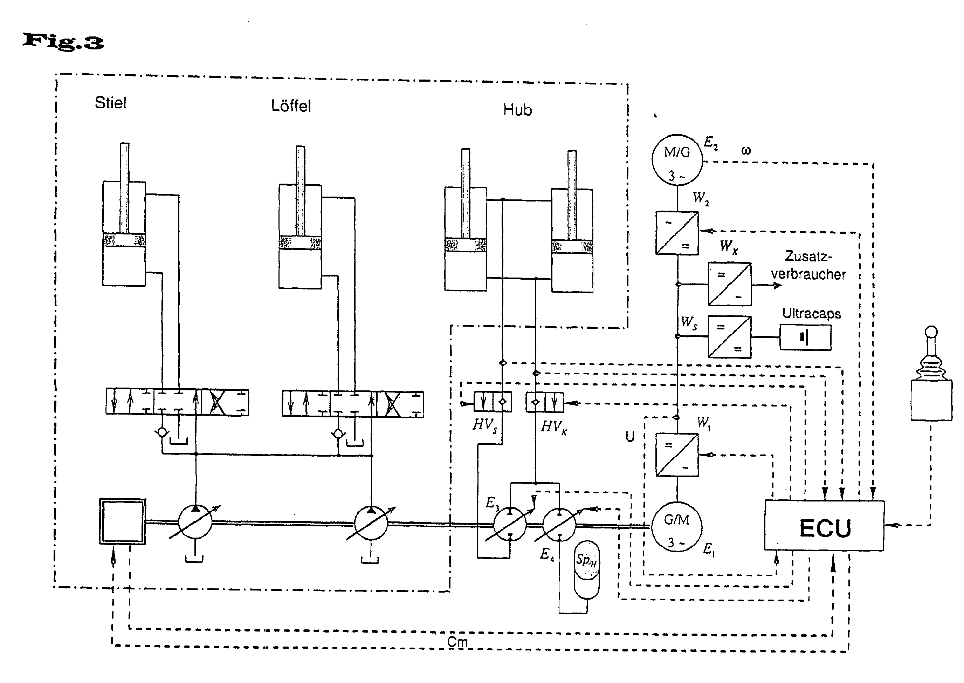

Schließlich ist in Figur 3 eine dritte Ausführungsvariante des erfindungsgemäßen Antriebs dargestellt. Hier handelt es sich im wesentlichen um einen Antrieb, der der Ausführungsvariante gemäß Figur 2, also der "elektrischen Lösung" entspricht. Anstelle eines Anschlusses an einen Sumpf ist hier bei der hydraulischen Verstelleinheit E₄ ein Hydraulikspeicher Sp_{H} angeschlossen, wie dies in ähnlicher Weise schon in der "Hydrauliklösung" gemäß der Ausführungsform nach Figur 1 der Fall war. Es handelt sich hier also um eine "elektro-hydraulische Lösung".

Die Verwendung des Hydraulikspeichers Sp_{H} bietet zwei Vorteile. Zum einen wird der Wirkungsgrad der Energiespeicherung verbessert. Schließlich wird die Baugröße der Hydraulikeinheit E₄ reduziert.

## Patentansprüche

1. Antrieb für einen Bagger mit einer Reihe von Einzelantrieben, wie einem Drehwerksantrieb, einem Hubantrieb, einem Löffelantrieb und einem Stielantrieb,
**dadurch gekennzeichnet,**
**daß** für den Drehwerksantrieb zwei reversierbare Verstelleinheiten vorgesehen sind, die zumindest mit einem Energiespeicher gekoppelt sind.

2. Antrieb nach Anspruch 1, **dadurch gekennzeichnet, daß** einer der reversierbaren Verstelleinheiten mit einem Antriebsaggregat des Baggers verbindbar ist.

3. Antrieb nach Anspruch 1 oder 2, **dadurch gekennzeichnet, daß** die reversierbaren Verstelleinheiten hydraulische Verstelleinheiten sind, die die Durchflußrichtung bei gleicher Drehzahlrichtung umkehren können, so daß sie als Motor oder Pumpe arbeiten können und daß der mindestens eine Speicher ein Hydraulikspeicher ist.

4. Antrieb nach Anspruch 3, **dadurch gekennzeichnet, daß** ein zweiter Hydraulikspeicher zur Kompensation des vom anderen Hydraulikspeicher entnommenen oder zurückgespeisten Hydrauliköls vorgesehen ist.

5. Antrieb nach Anspruch 4, **dadurch gekennzeichnet, daß** die hydraulischen reversierbaren Verstelleinheiten mit dem ersten Hydraulikspeicher und dem zweiten Hydraulikspeicher einen geschlossenen Hydraulikkreislauf bilden, bei dem die beiden hydraulischen reversierbaren Verstelleinheiten auf einer Seite, über die auch der erste Hydraulikspeicher angebunden ist, immer unter Hochdruck stehen, während sie auf der anderen Seite, über die der zweite Hydraulikspeicher angebunden ist, immer unter Niederdruck stehen.

6. Antrieb nach einem der Ansprüche 1 bis 5, **dadurch gekennzeichnet, daß** die Verstelleinheiten des Drehwerkantriebs mit den Verstelleinheiten des Hubwerkantriebes energetisch gekoppelt sind.

7. Antrieb nach einem der Ansprüche 1 bis 6, **dadurch gekennzeichnet, daß** er über eine elektronische Energiemanagementsteuerung steuerbar ist.

8. Antrieb nach Anspruch 1 oder 2, **dadurch gekennzeichnet, daß** die reversierbaren Einheiten elektrische Einheiten sind, die aus einer Elektroeinheit mit einem Spannungswandler bestehen.

9. Antrieb nach Anspruch 8, **dadurch gekennzeichnet, daß** der Speicher ein elektrischer Speicher ist.

10. Antrieb nach Anspruch 8 oder 9, **dadurch gekennzeichnet, daß** ein zusätzlicher Spannungswandler vorhanden ist, über den weitere elektrische Antriebe, wie beispielsweise Antriebe für Kühlungslüfter, Klimakompressoren, Wasserpumpen oder ähnlichem, versorgbar sind.

11. Antrieb nach einem der vorangehenden Ansprüche, **dadurch gekennzeichnet, daß** mindestens ein Hydraulikzylinder vorhanden ist, der mit zwei hydraulischen Verstelleinheiten verbunden ist.

12. Antrieb nach Anspruch 11, **dadurch gekennzeichnet, daß** eine der Verstelleinheiten vorzugsweise mit einem Hydraulikspeicher verbunden ist.

13. Antrieb nach Anspruch 11 oder 12, **dadurch gekennzeichnet, daß** die zwei hydraulischen Verstelleinheiten des mindestens einen Hydraulikzylinder mit einer der reversierbaren Verstelleinheiten verbindbar ist.
